Europäisches Patentamt

European Patent Office

Office européen des brevets

(19)

(11) Publication number: **0 045 185**
**A1**

(12) **EUROPEAN PATENT APPLICATION**

(21) Application number: 81303380.0

(22) Date of filing: 23.07.81

(51) Int. Cl.³: **B 60 C 21/08**

(30) Priority: 25.07.80 US 172259

(43) Date of publication of application: 03.02.82
Bulletin 82/5

(84) Designated Contracting States: CH DE FR GB IT LI

(71) Applicant: HEMPEX CORPORATION, 1401 Brickell
Avenue Suite 402 Brickell Concours, Miami Florida (US)

(72) Inventor: Lagorga, James A., 53 West 130th Street,
Hinkley Ohio 44233 (US)

(74) Representative: Haggart, John Pawson et al, Page,
White & Farrer 27 Chancery Lane, London, WC2A 1NT
(GB)

(54) Tyre sealing and balancing composition.

(57)  A tyre sealing and balancing composition comprising water, a solid thickener/filler, a fibrous puncture sealer and a lamellar puncture sealer.

EP 0 045 185 A1

-1-

## TYRE SEALING AND BALANCING COMPOSITION

The present invention relates to a tyre sealing and balancing composition introduced in small amounts within pneumatic tyre assemblies and the like. Hereafter, for brevity, the term "tyre" should be understood to refer to pneumatic tyres of both the tube and tubeless type since it will be apparent to one skilled in the art that the sealing and balancing composition of the present invention will function with equal effectiveness with pneumatic assemblies in general.

Heretofore, various compounds have been used for sealing and balancing tyres to prevent loss of air pressure because of punctures or small leaks, and to balance tyres unbalanced by uneven tyre wear. The compounds in the prior art have proven insufficient or have lost their effectiveness after a short period of time due to interaction between the components of the composition, evaporation of some of the ingredients or balling up and loss of ability to flow

The present invention provides a composition for use within the air space of a tyre which functions as a tyre sealant and balancing composition that overcomes the disadvantages of the prior art.

The tyre sealing and balancing composition of the present invention comprises, as essential components:

a solvent; (liquid carrier)

a solvent soluble thickener/filler which is a solid modified cellulose;

a solvent insoluble fibrous puncture filler; and

A solvent insoluble lamellar puncture filler, i.e., derived from a material which can be cleaved into thin "sheets" and which is flexible and elastic.

The invention thus provides an improved tyre sealing and balancing composition that maintains sufficient fluidity at all times and at normally encountered temperatures such that automatic balancing occurs upon wear of the tyre.

The improved tyre sealing and balancing composition will resist loss of air pressure upon a leak or puncture and maintain a tyre and its related wheel assembly in complete balance at all times.

In its broadest preferred form, the present invention can be viewed as comprising an aqueous solution of a solid thickener and filler which is a modified cellulose material, containing a puncture filler which comprises a water insoluble fibrous component and a water insoluble lamellar component.

With respect to the sealing function of the present invention, with the occurence of a leak or puncture the components of the composition of the present invention are forced into the leak opening by the exit air flow and form a seal due to the interaction of solid components on drying.

With respect to the balancing function of the present invention, upon tyre rotation the components of the sealing and balancing composition of the present invention flow under the resulting centrifugal force against the interior wall of the tyre, fill any irregularities and add weight to areas of the tyre which are slightly deficient, e.g., which have become lighter in weight due to uneven tyre wear.

The tyre sealing and balancing composition of the present invention will, when injected into the air space of a tyre or inner tube, function to seal leaks and maintain balancing of the tyre or inner tube assembly at all times.

The components of the tyre sealing and balancing composition of the present invention are:-

a liquid carrier;

a solid thickener and filler which is soluble in the liquid carrier and which is a modified cellulose material;

a puncture filler which comprises a fibrous material and a lamellar material.

Different liquid carriers can be utilized so long as the liquid carrier has sufficient volatility to dry upon exiting a leak or puncture and has a sufficiently low viscosity to permit components of the composition of the present invention to distribute about the tyre during rotation due to centrifugal force, a preferred liquid carrier of the present invention is water, because of water's solvent capability for the thickener and filler, low cost and easy availability. Proportions of organic solvents can be present, with certain preferred materials later being described.

Preferably a solid organic thickener/filler which is a water-soluble modified cellulose that is used, which upon drying, assists in forming a solid rubber-like sealant plug in the leak. I most prefer to use a hydroxyalkyl modified cellulose or a carboxyalkyl modified cellulose, most preferably hydroxyethyl cellulose and/or carboxymethyl cellulose. Such organic thickeners/fillers are commercially available under the tradename Cellosize. Cellosize is preferred for use in the present invention due to its excellent solubility in water, which is the liquid carrier currently preferred, its commercial availability, low cost, chemical stability and superior sealing and balancing effects. The thickener/fillers main purpose is to initiate leak and puncture sealing. If it is absent, a permanent seal will not be effectively formed, but in its presence a rubber-like plug quickly forms.

Mandatory solid puncture filler components include, as earlier indicated, a fibrous puncture filler and a lamellar puncture filler. Of course, the solid thickener/filler is also necessary.

The main criteria that the fibrous puncture fillers exhibit are insolubility in the liquid carrier, e.g., water, and good dispersibility. Asbestos fibers are the best fibrous puncture filler. While size does not currently appear to be overly important, asbestos fibers from about 12.5 mm to 25.4 mm in length provide good results.

The best lamellar puncture filler I use is mica of a size of about 1.6 mm or less; mica of this size typically resembles fibers in form.

Both the asbestos and mica co-operate with the solid thickener/filler to perform a sealing function.

The proportions of the mandatory components of the present invention can be varied, so long as the objectives now explained are not destroyed.

Liquid carrier, e.g., water, must be present in an amount sufficient to dissolve the thickener/filler, permit rapid movement of sealant components to a puncture area and insure a system viscosity sufficient for balancing; the thickener/filler must be present in an amount sufficient to ensure that the composition is not so fluid that it is immediately ejected through a leak or puncture and yet must not be present in proportions which increase viscosity to such a level that the balancing effect is inhibited; the puncture fillers are present in an amount effective to immediately seal any leak or puncture as they are drawn through the leak or puncture with escaping air and interact at the leak site with the dissolved thickener filler to form a rubber-like solid plug in the leak. They must also be present in a proportion sufficient to enable the balancing function of the present invention.

There is generally used, based on composition weight, 3.0 to 4.5 weight % lamellar puncture filler, specifically 2.5 to about 7 weight % of mica, often about 4.5 weight %, fibrous puncture filler, specifically asbestos, and generally 0.3 to 1.0 weight % thickener/filler. Most especially, I prefer to use about 0.5 weight % Cellosize, with the balance being water.

If amounts of thickener/filler are much lower than about 0.3 weight %, sealing rate can become too low. On the other hand, amounts greatly in excess of about 1 weight %

produce too thick a composition. Thus, for best results composition proportions are important.

A substantial proportion of the water can be replaced by ethylene glycol since the characteristics of ethylene glycol are, for the present invention, quite similar to those of water. In actuality, ethylene glycol is usually added to lower the freezing point of the water so that the composition of the present invention does not freeze at low ambient temperatures, i.e., maintains fluidity.

Less than about 50% of the water may be replaced with ethylene glycol due to the relatively high cost of ethylene glycol, and is preferred to use the order of 40 weight % ethylene glycol at most.

Thus, a preferred composition includes 3 to 4 weight % mica, 2.5 to 7 weight % asbestos, 0.3 to 1 weight % Cellosize, the balance being water, with of the order of up to 40% of the water replaceable by ethylene glycol on the basis of composition weight.

In addition to the above mandatory components (while ethylene glycol is optional, to avoid the chance of the composition freezing), several optional but highly preferred components can be present, specifically one or more rust inhibitors such as sodium benzoate, products commercially available such as Inhibitor 57, one or more rust inhibitors/cleaners such as borax (these last components are particularly desirable to reduce corrosion of the metal wheel rim of a tyre assembly, most especially when the wheel is made of steel), a wetting agent to act as a carrier to ensure that the fibers are easily conducted to the puncture or leak and the liquid carrier easily wets the rubber, e.g., an aerosol, and the like. Further, a dye can be added to the composition, e.g., a blue dye, to provide the composition with a pleasing colour. Of these optimal components, the wetting agent is most important to insure good leak or puncture sealing and will generally be used since such provides superior results even when used in small amounts, e.g., less than 1% by weight of the total composition. At present it appears the exact wetting agent used is not overly important and I believe anionic, nonionic and cationic wetting agents may all be useful. Since these are expensive I prefer to use the minimum amount needed to obtain the desired wetting function, e.g., 700 ml in a 500 gallon batch.

The composition of the present invention is formed in a simple fashion at ambient conditions by mixing all mandatory and/or desirable ingredients in a suitable container and then packaging for shipment to purchasers.

The following Example is the currently preferred best mode for producing a composition in accordance with the present invention.

### EXAMPLE

A 1893 $dm^3$ batch (approximate) of tyre sealing and balancing composition is prepared in the following manner.

946 $dm^3$ of water were introduced into a 1893 $dm^3$ container at room temperature. Then 833 $dm^3$ of ethylene glycol were mixed into the container. Next 11.34 kg of CELLOSIZE were added to the solution and stirred for ten to fifteen minutes. Next 2.27 kg of borax, 2.95 kg of sodium benzoate and 710 ml of Aersol C-61 (tradename of McKesson Chemical Co.), a wetting agent, were mixed in the solution for about ten minutes. For colour 25 ml of blue dye were added. Then 90.7 kg of mica fibers (less than 1.6 mm in length) were added by mixing in 22.7 kg at a time for about twenty minutes each. The composition was then ready for receiving the final ingredient, 68 kg of asbestos fibers 12.5 mm to 25.4 mm in length, but since it had reached a stage of thickening, the asbestos fibers were introduced in 11.3 kg quantities and mixed for twenty minutes with each introduction.

The quantity of mica fibers in the above bath preferably ranges from about 68 kg to about 90 kg, or about 3% to 4.5% of the mixture by weight.

Also, the asbestos fibers preferably range from about 2.5% to about 7% by weight of the total batch.

The quantity of sodium benzoate may range from about 0.1% to about 0.2% by weight.

In the above composition, the Cellosize was about 0.5% by weight of the composition and the amount of ethylene glycol was about 41.5% by weight of the composition.

In certain instances, e.g., where mixing is to break up asbestos or mica of large size or relatively poor quality, mixing for extended periods, e.g., hours, can be practiced.

The most simple and convenient way to use the resulting tyre sealing and balancing composition is to inject the composition through the tyre stem. For automobile tyres, about 227 g will suffice, whereas in larger tyres such as for earth movers, about 19 dm$^3$ of sealing and balancing composition is required. A further surprising effect encountered upon use of the composition of the present invention is that tyres containing the composition of the present invention were found to run substantially cooler than tyres not containing the composition, and such has been documented by independent laboratory testing.

0045185

Claims:

1.   A tyre sealing and balancing composition comprising a liquid carrier, a solid liquid carrier soluble thickener and filler which is modified cellulose material, a liquid carrier insoluble fibrous puncture filler and a liquid carrier insoluble lamellar puncture filler.

2.   A composition as claimed in Claim 1, wherein said thickener and filler is a water-soluble modified cellulosic material.

3.   A composition as claimed in Claim 1, wherein said liquid carrier is water and said thickener and filler is hydroxyethyl cellulose, or carboxymethyl cellulose or a mixture thereof.

4.   A composition as claimed in any one of Claims 1 to 3, wherein said fibrous puncture filler is asbestos.

5.   A composition as claimed in any one of Claims 1 to 4, wherein said lamellar puncture filler is mica.

6.   A composition as claimed in any one of Claims 1 to 5, wherein a portion of said water is replaced by a liquid which lowers the freezing point of said water.

7.   A composition as claimed in Claim 6, wherein said liquid is ethylene glycol.

8.   A composition as claimed in Claim 1, which consists essentially of water, ethylene glycol, a modified cellulosic material as said thickener and filler, and mica and asbestos as said puncture fillers.

9.   A composition as claimed in Claim 8, consisting essentially of:

> 3 to 4.5 weight % mica;
> 2.5 to 7 weight% asbestos;
> 0.3 to 1 weight % hydroxyethyl cellulose, or carboxymethyl cellulose or a mixture thereof;

balance water, of which up to about 50 weight % can be replaced by ethylene glycol.

10.  A composition as claimed in Claim 9, further comprising a wetting agent.

European Patent Office

EUROPEAN SEARCH REPORT

0045185
Application number

EP 81 30 3380

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | B 60 C 21/08 |
| | US - A - 4 137 206 (J. KENT) <br> * Whole document * <br> -- | 1,2,4, 6-8 | |
| | US - A - 3 352 696 (T. WALLACE) <br> * Whole document * <br> -- | 1-4, 6-8 | |
| A | US - A - 4 101 494 (J. KENT) | | |
| A | DE - A - 1 908 843 (BATABATIAN) | | TECHNICAL FIELDS SEARCHED (Int. Cl.3) |
| A | NL - A - 68 08749 (SUNLAND REFINING) | | B 60 C 21/08 <br> B 29 H 17/00 |
| A | US - A - 3 910 334 (J. GARDNER) | | |
| | ----- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search <br> The Hague | Date of completion of the search <br> 27-10-1981 | Examiner <br> SCHMITT |

EPO Form 1503.1 06.78